# FASCICULE DE BREVET EUROPEEN

(11) **EP 3 398 978 B1**
(45) Date de publication et mention de la délivrance du brevet: **11.03.2020**
(21) Numéro de dépôt: 18167793.1
(22) Date de dépôt: 17.04.2018
(51) Int. Cl.: C08F 220/24, C08F 293/00, C09D 133/16, C10M 107/28, C09D 153/00, C10M 107/38, C10M 107/46, C10M 107/50

(54) **AGENT D'ÉPILAMAGE ET PROCÉDÉ D'ÉPILAMAGE UTILISANT UN TEL AGENT D'ÉPILAMAGE**
EPILAMISIERUNGSMITTEL UND EPILAMISIERUNGSVERFAHREN, BEI DEM DIESES EPILAMISIERUNGSMITTEL VERWENDET WIRD
EPILAME-COATING AGENT AND EPILAME-COATING METHOD USING SUCH AN EPILAME-COATING AGENT

(30) Priorité: 05.05.2017 EP 17169633
(43) Date de publication de la demande: 07.11.2018
(73) Titulaire: The Swatch Group Research and Development Ltd, 2074 Marin (CH)
(72) Inventeur: Letondor, Christophe, 2525 Le Landeron (CH); Rannoux, Claire, 1110 Morges (CH)
(74) Mandataire: ICB SA

(56) Documents cités:
- EP-A1- 3 070 133
- EP-A1- 3 070 152
- US-A1- 2012 088 099
- Elizabeth G. Kelley, Julie N. L. Albert, Millicent O. Sullivan and Thomas H. Epps, III: "Stimuli-responsive copolymer solution and surface assemblies for biomedical applications", Chemical Society Reviews, vol. 42, no. 17 13 février 2013 (2013-02-13), 20 juillet 2017 (2017-07-20), pages 7057-7071, XP002772673, ISSN: 0306-0012, DOI: 10.1039/c3cs35512h Extrait de l'Internet: URL:http://pubs.rsc.org/en/content/article pdf/2013/cs/c3cs35512h [extrait le 2017-07-20]

## Description

### Domaine de l'invention

La présente invention se rapporte au domaine de la mécanique et notamment au domaine de l'horlogerie ou de la bijouterie. Elle concerne plus particulièrement un agent d'épilamage, un copolymère, ainsi qu'un substrat, notamment un substrat d'un élément d'une pièce d'horlogerie ou de bijouterie comprenant une surface recouverte au moins partiellement d'un épilame issu d'un tel agent d'épilamage ou d'un tel copolymère. Elle concerne également un procédé d'épilamage d'un tel substrat, ainsi qu'une pièce d'horlogerie ou de bijouterie comprenant un élément comportant un tel substrat.

### Arrière-plan de l'invention

Il existe différents procédés pour modifier l'état de surface d'un substrat par un traitement au moyen d'un agent approprié de manière à améliorer spécifiquement certaines propriétés de surface. Par exemple, dans le domaine de la mécanique, et en particulier dans le domaine de l'horlogerie, mais aussi dans le domaine de la bijouterie, l'épilamage d'une surface d'une pièce ou d'un élément est souvent réalisé au moyen d'un agent d'épilamage afin de contrôler et de réduire l'énergie de surface de ladite surface au cours de son utilisation. Plus particulièrement, un épilame a pour but d'empêcher l'étalement des huiles ou lubrifiants sur les éléments d'une pièce d'horlogerie ou de bijouterie en formant une surface hydrophobe et lipophobe (ou oléophobe) permettant au lubrifiant de rester à un endroit prédéterminé de la surface traitée.

Dans le domaine horloger, on peut citer les documents EP 3 070 152, EP 3 070 133 et US 2012/0088099 divulguant des agents d'épilamage. Les documents EP 3 070 152 et EP 3 070 133 divulguent respectivement un composé sous la forme d'un copolymère bloc et d'un copolymère statistique comprenant au moins deux unités. Pour le copolymère bloc, les unités sont connectées entre elles par des liaisons covalentes par leurs chaines principales en séquences linéaires. Pour le copolymère statistique, les unités sont associées par liaisons covalentes par leurs chaines principales et réparties de manière aléatoire. Le document US 2012/0088099 divulgue une couche ultrafine à base de catéchol utilisable comme agent épilame. Grâce à la base de catéchol, la couche ultrafine est fermement attachée à la surface du substrat solide.

Dans le domaine biomédical, on connaît la publication dans la revue Chemical Society Reviews, vol.42, n°17, du 7 septembre 2013, p.7057-7071 intitulée "Stimuli-responsive copolymer solution and surface assemblies for biomedical applications". Cette dernière divulgue des matériaux polymères sensibles à des stimuli tels que la température et la lumière, permettant d'éliminer un groupe clivable.

Le procédé d'épilamage standard est un procédé de dip coating. Il consiste à plonger les pièces d'horlogerie dans un bain d'épilamage, c'est-à-dire une solution de l'agent d'épilamage dans un solvant. Les agents d'épilamage permanents et performants utilisés à l'heure actuelle pour l'épilamage sont au moins partiellement fluorés. De ce fait, les molécules qui les composent ne sont pas ou peu solubles dans des solvants autres que des solvants fluorés. Les bains d'épilamage doivent donc être à base de solvant fluoré, et de ce fait, ne sont pas écologiques. Ils peuvent aussi nécessiter l'utilisation d'équipements fermés avec récupération des vapeurs et retraitement, ce qui génère des coûts importants.

Pour résoudre ce problème, une solution proposée a été de développer des agents d'épilamage comprenant des molécules plus faiblement fluorées et qui peuvent être solubilisés dans un solvant organique, tel que l'alcool isopropylique. Toutefois, l'épilame déposé présente une résistance aux lavages et un effet épilame ne répondant pas aux exigences de l'horlogerie. De plus, les solvants organiques utilisés présentent également des inconvénients, tels que l'inflammabilité et la toxicité.

### Résumé de l'invention

L'invention a notamment pour objectif de pallier les différents inconvénients des agents d'épilamage et des procédés d'épilamage connus.

Plus précisément, un objectif de l'invention est de fournir un agent d'épilamage permettant un procédé d'épilamage écologique, utilisant un bain d'épilamage aqueux.

A cet effet, la présente invention concerne un agent d'épilamage comprenant au moins un composé comprenant au moins des groupements hydrophobes et oléophobes agencés pour conférer des propriétés épilames audit composé, et au moins un groupement hydrophile agencé pour rendre ledit composé soluble en milieu aqueux, ledit groupement hydrophile étant lié au composé par au moins un groupe clivable.

La présente invention concerne également un copolymère comprenant des unités M, des unités N, et optionnellement au moins une unité P, associées par liaisons covalentes par leurs chaines principales, où
M est 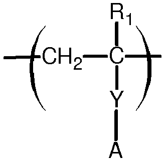 N est 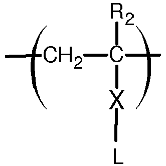 P est 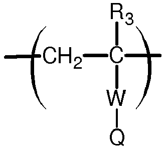 où R₁, R₂, R₃, identiques ou différents, sont H, un groupe alkyle en C₁-C₁₀, alkényle en C₁-C₁₀, et de préférence H, CH₃
W, X, identiques ou différents, sont des bras espaceurs constitués d'un hétéroatome ou d'une chaîne hydrocarbonée pouvant contenir au moins un hétéroatome, linéaire ou ramifiée, comprenant au moins un atome de carbone
Y, identique ou différent, est un groupement comprenant au moins un groupe clivable
A, identique ou différent, est un groupement hydrophile agencé pour rendre ledit copolymère soluble en milieu aqueux
L, identique ou différent, est un groupement carboné en C₁-C₂₀ halogéné, de préférence fluoré
Q, identique ou différent, est H, CH₃, une chaîne hydrocarbonée, de préférence différente de A, pouvant contenir au moins un hétéroatome, linéaire ou ramifiée, saturée ou insaturée, comprenant au moins un atome de carbone.

La présente invention concerne également un copolymère bloc comprenant au moins un bloc d'unités N et optionnellement d'au moins une unité P, associées par liaisons covalentes par leurs chaines principales, et au moins un bloc comprenant au moins un groupement hydrophile agencé pour rendre ledit copolymère soluble en milieu aqueux, lesdits blocs étant liés entre eux par liaisons covalentes par au moins un groupe clivable Y, où N, P, et Y sont tels que définis ci-dessus.

D'une manière particulièrement préférée, l'agent d'épilamage selon l'invention comprend au moins un composé constitué par l'un des copolymères définis ci-dessus.

Un tel agent d'épilamage permet d'utiliser un bain d'épilamage aqueux afin d'obtenir un procédé d'épilamage économique et écologique, tout en permettant d'obtenir un effet épilame performant et permanent.

La présente invention concerne également un bain d'épilamage comprenant au moins 50% en volume d'eau et un agent d'épilamage tel que défini ci-dessus.

La présente invention concerne également l'utilisation d'un composé comprenant au moins des groupements hydrophobes et oléophobes agencés pour procurer audit composé des propriétés épilames, et au moins un groupement hydrophile agencé pour rendre ledit composé soluble en milieu aqueux, ledit groupement hydrophile étant lié au composé par au moins un groupe clivable, comme agent d'épilamage.

La présente invention concerne également l'utilisation d'un copolymère tel que défini ci-dessus comme agent d'épilamage.

La présente invention concerne également un procédé d'épilamage d'au moins une partie d'une surface d'un substrat comprenant les étapes de :
a) préparation d'un bain d'épilamage par solubilisation d'au moins un agent d'épilamage tel que défini ci-dessus ou comprenant au moins un copolymère tel que défini ci-dessus dans une solution contenant au moins 50% en volume d'eau
b) optionnellement, préparation de la surface du substrat
c) mise en contact de la surface du substrat avec l'agent épilamage dans le bain d'épilamage
d) optionnellement, séchage
e) séparation du groupement hydrophile de l'agent d'épilamage par clivage
f) rinçage de la surface du substrat
g) séchage.

La présente invention concerne également un substrat comprenant une surface dont au moins une partie est recouverte d'un épilame, caractérisé en ce que ledit épilame a été obtenu par clivage d'un agent d'épilamage tel que défini ci-dessus ou comprenant au moins un copolymère tel que défini ci-dessus, ledit épilame comprenant au moins un composé comprenant au moins des groupements hydrophobes et oléophobes et au moins un reste d'un groupe clivable qui a été utilisé pour lier au moins un groupement hydrophile audit composé.

La présente invention concerne également une pièce d'horlogerie ou de bijouterie comprenant un élément comportant un substrat tel que défini ci-dessus.

### Description détaillée de l'invention

Conformément à la présente invention, il est décrit un agent d'épilamage comprenant au moins un composé comprenant au moins des groupements hydrophobes et oléophobes agencés pour conférer des propriétés épilames audit composé, et au moins un groupement hydrophile agencé pour rendre ledit composé soluble en milieu aqueux, ledit groupement hydrophile étant lié par liaison covalente au composé par au moins un groupe clivable.

D'une manière avantageuse, les groupements hydrophobes et oléophobes, identiques ou différents, comprennent un groupement carboné en C₁-C₂₀ halogéné, de préférence fluoré.

Les groupements hydrophiles utilisés dans l'invention sont capables de réaliser des liaisons (hydrogène, ionique) avec des molécules d'eau. Ils sont choisis fortement polaires et hydrophiles pour pouvoir solubiliser dans une solution aqueuse, de préférence de l'eau, le composé et ses groupements hydrophobes et oléophobes à effet épilame. Le nombre et/ou la taille des groupements hydrophiles sont choisis afin de pouvoir masquer, temporairement, l'effet hydrophobe desdits groupements hydrophobes et oléophobes à effet épilame. Ainsi, l'agent d'épilamage selon l'invention peut être utilisé sous forme de bain d'épilamage aqueux, parfaitement écologiques, rendant possible le dépôt d'un agent d'épilamage au moyen d'un procédé d'épilamage écologique.

De préférence, le groupement hydrophile est choisi parmi le groupe comprenant un groupement dérivé d'un éther de glycol, un groupement dérivé d'une amine, d'un alcool, d'un acide carboxylique, d'un acide sulfonique, d'un acide phosphonique, d'un sel de carboxylate, d'un sel de sulfonate, d'un sel de phosphonate.

D'une manière particulièrement préférée, le groupement hydrophile utilisé dans l'invention est un groupement dérivé d'un éther de glycol se présentant sous la forme d'un groupement dérivé d'un polyéther, de préférence un polyéthylène glycol ou un polypropylène glycol, ou un groupement dérivé d'une amine se présentant sous la forme d'un groupement dérivé d'une polyamine.

Une fois l'agent d'épilamage déposé sur la surface d'un substrat, le groupe hydrophile utile pour la solubilisation en milieu aqueux, doit désormais être éliminé du composé et retiré de la surface du substrat afin que le composé restant en surface présente l'effet épilame souhaité, grâce à ses groupements hydrophobes et oléophobes à effet épilame.

A cet effet, le groupement hydrophile est lié au composé par une liaison chimique clivable, au moyen d'un groupe clivable liant par covalence ledit groupe hydrophile au composé.

De préférence, le groupe clivable est un groupe clivable par au moins l'un des traitements choisi parmi le groupe comprenant un traitement UV, un traitement thermique, un traitement par stimulus mécanique, un traitement par enzyme, et un traitement par déclencheur chimique. Les différents traitements pour séparer le groupement hydrophile de l'agent d'épilamage peuvent être appliqués de manière individuelle, ou simultanément ou en série, en fonction de la nature du groupe clivable qui doit être séparé du reste du composé portant les groupements hydrophobes et oléophobes, avec le groupement hydrophile. De préférence, le groupe clivable est choisi parmi le groupe comprenant un groupe clivable par UV, un groupe clivable par traitement thermique, un groupe clivable par un stimulus mécanique, un groupe clivable par une enzyme, et un groupe clivable par un déclencheur chimique.

D'une manière particulièrement préférée, le groupe clivable est choisi parmi le groupe comprenant
- un groupement dérivé d'un nitrobenzyle ester, clivable par UV, tel que 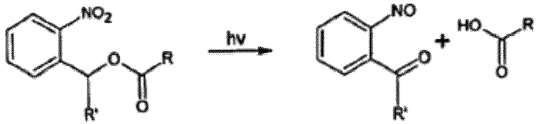
- un adduit d'une réaction de Diels Aider, clivable par traitement thermique, tel que 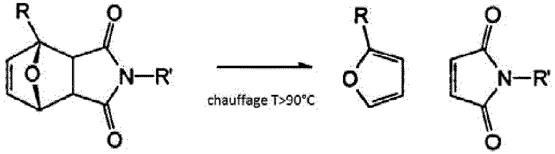
- un groupe clivable par un stimulus mécanique (par exemple ultrason), tel que 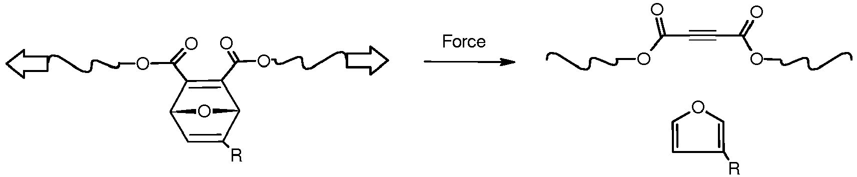
- un groupe clivable par une enzyme, par exemple une estérase
- et un groupement comprenant une fonction dithio, clivable par un déclencheur chimique, tel que 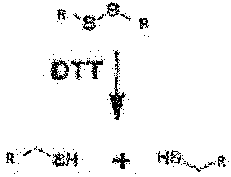 où R est le composé avec ses groupements hydrophobes et oléophobes à effet épilame et R' est le groupement hydrophile.

D'une manière particulièrement préférée, le groupe clivable est un groupement dérivé d'un nitrobenzyle ester.

Selon les variantes de réalisation, le groupe clivable avec le groupement hydrophile associé peuvent former une structure linéaire ou ramifiée avec le composé, et les groupements hydrophobes et oléophobes peuvent également former une structure linéaire ou ramifiée avec le composé, les différentes combinaisons étant possibles. Ainsi, par exemple, les groupements hydrophobes et oléophobes et les groupements hydrophiles liés au composé par un groupe clivable forment respectivement des chaines latérales sur le squelette carboné du composé, réparties de manière statistique ou en bloc, ou les groupements hydrophobes et oléophobes forment des chaines latérales sur le squelette carboné du composé et les groupements hydrophiles forment une structure linéaire et sont liés par un groupe clivable au composé, ou les groupements hydrophobes et oléophobes forment des chaines latérales sur le squelette carboné du composé, et les groupements hydrophiles forment des chaines latérales sur un squelette carboné lié au composé par un groupe clivable.

La présente invention concerne également un copolymère comprenant des unités M, des unités N, et optionnellement au moins une unité P, associées par liaisons covalentes par leurs chaines principales, où
M est 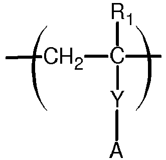 N est 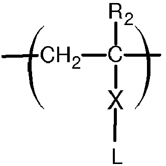 P est 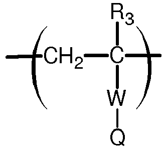 où R₁, R₂, R₃, identiques ou différents, sont H, un groupe alkyle en C₁-C₁₀, alkényle en C₁-C₁₀, et de préférence H, CH₃
W, X, identiques ou différents, sont des bras espaceurs constitués d'un hétéroatome ou d'une chaîne hydrocarbonée pouvant contenir au moins un hétéroatome, linéaire ou ramifiée, comprenant au moins un atome de carbone
Y, identique ou différent, est un groupement comprenant au moins un groupe clivable
A, identique ou différent, est un groupement hydrophile agencé pour rendre ledit copolymère soluble en milieu aqueux
L, identique ou différent, est un groupement carboné en C₁-C₂₀ halogéné, de préférence fluoré
Q, identique ou différent, est H, CH₃, une chaîne hydrocarbonée, de préférence différente de A, pouvant contenir au moins un hétéroatome, linéaire ou ramifiée, saturée ou insaturée, comprenant au moins un atome de carbone.

Un tel copolymère peut être utilisé pour constituer le composé de l'agent d'épilamage tel que défini ci-dessus.

De préférence, le copolymère n'est constitué que d'unités M et N et optionnellement des unités P. De préférence, le copolymère n'est constitué que d'unités M, N et P.

Le copolymère de l'invention peut être un copolymère statistique dans lequel les unités M, N et P sont reliées entre elles statistiquement par leurs chaines principales, c'est-à-dire réparties de manière aléatoire, de sorte que le copolymère statistique peut s'écrire sous la forme (I) :

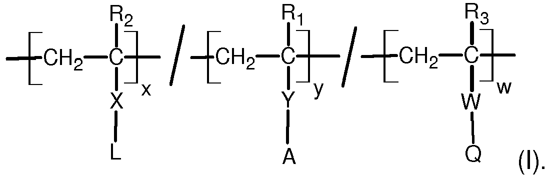

Le copolymère de l'invention peut également être un copolymère bloc comprenant au moins un bloc d'unités M associées par liaisons covalentes par leurs chaines principales, et au moins un bloc d'unités N comprenant optionnellement au moins une unité P associées par liaisons covalentes par leurs chaines principales, lesdits blocs étant connectés entre eux par liaisons covalentes par leurs chaines principales en séquences linéaires.

Le copolymère bloc peut s'écrire sous la forme (II) :

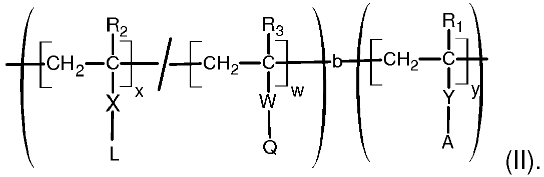

De préférence, le copolymère bloc comprend un seul bloc d'unités M et un seul bloc d'unités N comprenant optionnellement au moins une unité P.

De préférence, les unités M sont réparties par copolymérisation statistique pour former un seul bloc constitué d'unités M.

Les unités P peuvent être réparties au sein du bloc composé des unités N, par exemple par copolymérisation statistique d'unités P avec les unités N, l'ensemble formant un seul bloc constitué de préférence majoritairement d'unités N et assimilé à un bloc d'unités N.

Les unités P peuvent également être sous la forme d'un troisième bloc, le bloc d'unités P étant connecté de préférence au bloc d'unités N, lui-même connecté au bloc d'unités M, par liaisons covalentes par leurs chaines principales en séquences linéaires. Le copolymère bloc peut s'écrire sous la forme :

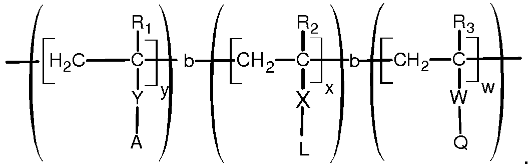

D'une manière préférée, le groupement A est un groupement hydrophile choisi parmi le groupe comprenant un groupement dérivé d'un éther de glycol, de préférence se présentant sous la forme d'un groupement dérivé d'un polyéther, de préférence un groupement dérivé d'un polyéthylène glycol (PEG) ou d'un polypropylène glycol (PPG), un groupement dérivé d'une amine, de préférence se présentant sous la forme d'un groupement dérivé d'une polyamine, un groupement dérivé d'un alcool, d'un acide carboxylique, d'un acide sulfonique, d'un acide phosphonique, d'un sel de carboxylate, d'un sel de sulfonate et d'un sel de phosphonate. Le groupement dérivé d'un polyéther ou d'une polyamine comprend de préférence entre 2 et 100 unités, plus préférentiellement entre 5 et 30 unités. D'une manière particulièrement préférée, A est un groupement dérivé d'un polyéthylène glycol (PEG) ou d'un polypropylène glycol (PPG), comprenant de préférence entre 2 et 100 unités, plus préférentiellement entre 5 et 30 unités.

La présente invention concerne également un copolymère bloc comprenant au moins un bloc d'unités N comprenant optionnellement au moins une unité P, associées par liaisons covalentes par leurs chaines principales, et au moins un bloc comprenant au moins un groupement hydrophile agencé pour rendre ledit copolymère soluble en milieu aqueux, lesdits blocs étant liés entre eux par liaisons covalentes par au moins un groupe clivable Y, où N, P, et Y sont tels que définis ci-dessus.

Un tel copolymère peut être utilisé pour constituer le composé de l'agent d'épilamage tel que défini ci-dessus.

Selon une variante de réalisation, le bloc comprenant au moins un groupement hydrophile est un groupement A' choisi parmi le groupe comprenant au moins un groupement dérivé d'un éther de glycol, de préférence se présentant sous la forme d'un groupement dérivé d'un polyéther, de préférence un groupement dérivé d'un polyéthylène glycol (PEG) ou d'un polypropylène glycol (PPG), et un groupement dérivé d'une amine, de préférence se présentant sous la forme d'un groupement dérivé d'une polyamine, le copolymère bloc pouvant s'écrire sous la forme (III) :

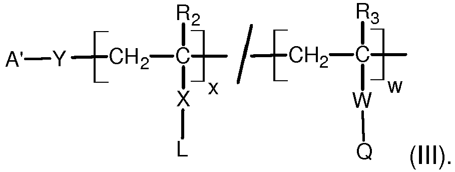

De préférence, le groupement hydrophile A' comprend entre 1 et 200 unités, plus préférentiellement entre 5 et 100 unités, et encore plus préférentiellement entre 10 et 50 unités. D'une manière particulièrement préférée, A' est un groupement dérivé d'un éther de glycol comprenant de préférence entre 1 et 200 unités d'éthylène ou de propylène glycol. Préférentiellement, A' est un groupement dérivé d'un polyéthylène glycol (PEG) ou d'un polypropylène glycol (PPG), comprenant de préférence entre 2 et 200 unités d'éthylène ou de propylène glycol, plus préférentiellement entre 5 et 100 unités, et encore plus préférentiellement entre 10 et 50 unités.

Selon une autre variante de réalisation, le bloc comprenant au moins un groupement hydrophile comprend des unités G associées par liaisons covalentes par leurs chaines principales,
où G est 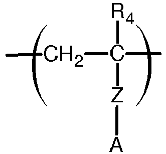 où R₄, identique ou différent, est H, un groupe alkyle en C₁-C₁₀, alkényle en C₁-C₁₀, et de préférence H, CH₃
Z, identique ou différent, est un bras espaceur constitué d'un hétéroatome ou d'une chaîne hydrocarbonée pouvant contenir au moins un hétéroatome, linéaire ou ramifiée, comprenant au moins un atome de carbone
A est tel que défini ci-dessus.

Un tel copolymère bloc peut s'écrire sous la forme (IV):

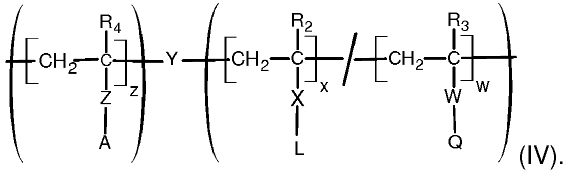

Le groupement A est tel que défini ci-dessus, de sorte que, par exemple, le bloc comprenant au moins un groupement hydrophile comprenant des unités G est un groupement dérivé d'un poly ((meth)acrylate fonctionnel polyéther) de préférence poly ((meth)acrylate fonctionnel PEG ou PPG), de poly ((meth)acrylate fonctionnel polyamine), de poly ((meth)acrylate fonctionnel aminé), de poly ((meth)acrylate fonctionnel alcool), de poly ((meth)acrylate fonctionnel acide carboxylique), de poly ((meth)acrylate fonctionnel acide sulfonique), de poly ((meth)acrylate fonctionnel acide phosphonique), de poly ((meth)acrylate fonctionnel carboxylate), de poly ((meth)acrylate fonctionnel sulfonate),de poly ((meth)acrylate fonctionnel phosphonate), de poly (styrène fonctionnel PEG ou PPG), de poly (styrène fonctionnel phosphonate), de poly (styrène fonctionnel sulfonate), depoly (styrène fonctionnel acide phosphonique), ou de poly (styrène fonctionnel acide sulphonique). L'expression (meth)acrylate signifie acrylate ou methacrylate.

De préférence, le bloc comprenant au moins un groupement hydrophile comprenant des unités G est un groupement dérivé d'un poly ((meth)acrylate fonctionnel PEG ou PPG) ou d'un poly (styrène fonctionnel PEG ou PPG).

Le nombre d'unités z est d'au moins deux, de préférence compris entre 5 et 200 unités, et plus préférentiellement entre 10 et 100.

Le bloc A' et le bloc comprenant les unités G peuvent être utilisés avec le bloc d'unités N comprenant optionnellement au moins une unité P pour former un copolymère tribloc.

Pour l'ensemble des copolymères définis ci-dessus, les groupements W, X, Z, identiques ou différents, sont, d'une manière avantageuse, choisis parmi le groupe comprenant des groupes esters en C₁-C₂₀, de préférence en C₂-C₁₀, plus préférentiellement en C₂-C₆, et encore plus préférentiellement en C₂-C₅, de préférence des groupes alkylesters, de préférence linéaires, des groupes amides, et des groupes dérivés du styrène.

De préférence, Y est un groupement comprenant un groupe clivable par au moins l'un des traitements choisi parmi le groupe comprenant un traitement UV, un traitement thermique, un traitement par stimulus mécanique, un traitement par enzyme, et un traitement par déclencheur chimique. Les différents traitements pour séparer le groupement hydrophile de l'agent d'épilamage peuvent être appliqués de manière individuelle, ou simultanément ou en série, en fonction de la nature du groupe clivable qui doit être séparé du reste du composé portant les groupements hydrophobes et oléophobes, avec le groupement hydrophile. D'une manière particulièrement préférée, Y est un groupement comprenant un groupe clivable choisi parmi le groupe comprenant un groupe clivable par UV, un groupe clivable par traitement thermique, un groupe clivable par un stimulus mécanique, un groupe clivable par une enzyme, et un groupe clivable par un déclencheur chimique. De préférence, Y est un groupement comprenant un groupe clivable choisi parmi le groupe comprenant un groupement dérivé d'un nitrobenzyle ester, un adduit d'une réaction de Diels Aider, un groupe clivable par exemple par ultrason, un groupe clivable par exemple par une estérase et un groupement comprenant une fonction dithio, tel que déjà définis plus haut relativement à l'agent d'épilamage selon l'invention. En fonction du groupe clivable, la séparation du groupement hydrophile du reste du composé portant les groupements hydrophobes et oléophobes se fait en cassant de préférence la liaison covalente reliant le groupe clivable audit composé portant les groupements hydrophobes et oléophobes, de sorte que seul subsiste sur le composé portant les groupements hydrophobes et oléophobes un reste le plus neutre possible vis-à-vis de propriétés d'épilamage, l'essentiel de la molécule du groupe clivable partant avec le groupe hydrophile.

Les groupements fonctionnels d'intérêt A ou A' sont capables de réaliser des liaisons (hydrogène, ionique) avec des molécules d'eau. Ils sont choisis fortement polaires et hydrophiles pour pouvoir solubiliser dans une solution aqueuse, de préférence de l'eau, le copolymère et ses groupements L. Le nombre et/ou la taille des groupements A et A' sont choisis afin de pouvoir masquer, temporairement, l'effet hydrophobe desdits groupements L.

Les groupements fonctionnels d'intérêt L sont responsables de l'effet épilame et correspondent aux groupements hydrophobes et oléophobes à effet épilame de l'agent d'épilamage de l'invention décrit ci-dessus. Ils comprennent au moins un atome d'halogène, de préférence un atome de fluor. D'une manière préférée, L est un groupement carboné, soit une chaine alkyle, pouvant être cyclique, de préférence sans hétéroatome, en C₂-C₂₀, de préférence en C₄-C₁₀, et plus préférentiellement en C₆-C₉. L est partiellement ou totalement halogéné. D'une manière avantageuse, L est un groupement au moins partiellement fluoré, et de préférence totalement fluoré. L peut également comprendre un atome d'hydrogène sur le groupe terminal. L est de préférence une chaine alkyle perfluorée.

Les groupements fonctionnels d'intérêt Q des unités P sont utilisés pour modifier les propriétés du copolymère ou de l'agent d'épilamage et/ou apporter d'autres fonctions. D'une manière avantageuse, le copolymère comprend au moins deux groupes Q différents.

Par exemple, les groupements fonctionnels d'intérêt Q sont aptes à réagir avec la surface du substrat à épilamer, de manière à constituer des groupements d'ancrage de l'agent d'épilamage à la surface d'un substrat. Avantageusement, des groupements Q peuvent également être prévus en terminaison du copolymère. Par exemple, Q, identique ou différent, constitue un groupement d'ancrage, et est choisi parmi le groupe comprenant les thiols, thioethers, thioesters, sulfures, thioamides, silanols, alkoxysilanes, halogénures de silane, hydroxyles, phosphates, acides phosphoniques protégés ou non, phosphonates protégés ou non, aminés, ammoniums, hétérocycles azotés, acides carboxyliques, anhydrides, catéchols (substitués ou non, tels que le groupe catéchol ou le groupe nitrocatéchol).

Selon une autre variante possible, Q peut être une chaine alkyle, de préférence en C₈-C₂₀, utilisée pour modifier l'angle de contact obtenu ou une chaine capable de constituer des points de réticulation lors d'une étape de réticulation complémentaire (étape h). Par exemple, les unités P peuvent être issues de stéaryl méthacrylate.

De préférence, le copolymère de l'invention comprend, en pourcentage molaire, entre 50% et 99%, de préférence entre 60% et 95% d'unités N, entre 0% et 50%, de préférence entre 0% et 20%, et plus préférentiellement entre 0% et 10% d'unités P, et lorsque les unités M ou les unités G sont présentes, entre 1% et 50%, de préférence entre 5% et 40%, et plus préférentiellement entre 5% et 30% d'unités M ou d'unités G, les pourcentages étant exprimés par rapport au nombre total d'unités (w+x+y) ou (w+x+z).

D'une manière avantageuse, le copolymère comprend entre 10 et 350 unités (w+x+y) ou (w+x+z).

La composition en unités N et P est similaire aux compositions ci-dessus lorsque le bloc hydrophile est le groupement A' selon la formule III.

D'une manière particulièrement avantageuse, les unités M, N et P sont choisies pour porter plusieurs groupements A, de préférence de même nature, plusieurs groupements L, de préférence de même nature, et éventuellement un ou plusieurs groupements Q qui peuvent être identiques ou de nature différente, de manière à affiner et à améliorer les propriétés de l'agent épilame, afin d'obtenir plus spécifiquement un agent épilame universel et présentant une affinité améliorée avec le substrat.

Un copolymère statistique selon la présente invention de forme (I) est par exemple un copolymère qui présente la structure suivante (Ia): 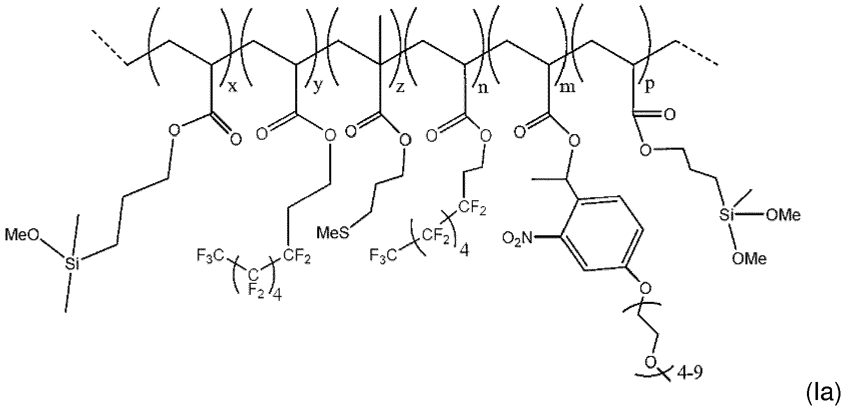 dans lequel les unités P sont des unités d'ancrage, les groupes hydrophiles sont dérivés d'un PEG et le groupe clivable est un groupement 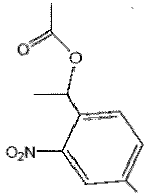 dérivé d'un nitrobenzyle ester clivable par UV, qui, après clivage, donnera un reste -COOH sous la forme d'une chaine latérale du copolymère.

Un copolymère bloc selon la présente invention de forme (II) est par exemple un copolymère bloc qui présente la structure suivante (IIa): 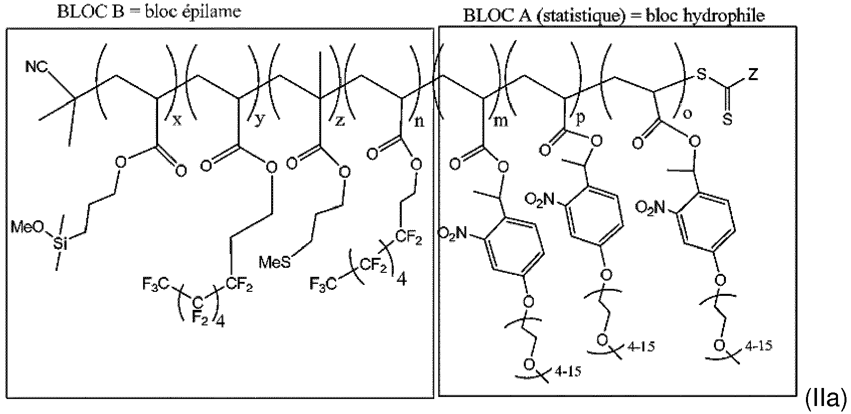 dans lequel les unités N et P forment un bloc B à effet épilame (les unités P étant des unités d'ancrage), dans lequel les unités P sont réparties de manière statistique dans le bloc B, et les unités M forment un bloc A hydrophile dans lequel les groupes hydrophiles sont répartis de manière statistique, lesdits groupes hydrophiles étant dérivés d'un PEG et les groupes clivables étant des groupements 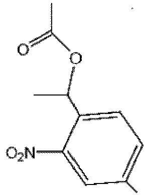 dérivés d'un nitrobenzyle ester clivables par UV, qui, après clivage, donneront des restes -COOH sous la forme de chaines latérales du copolymère du bloc A. Un tel copolymère est obtenu par exemple par RAFT (polymérisation radicalaire contrôlée par transfert de chaîne réversible par addition-fragmentation). Dans ce cas particulier, le nombre de maillons du bloc A n'excédera pas 10, de façon à limiter l'hydrophilie de l'épilame après clivage de la fonction nitrobenzylester (groupement COOH pendant).

Dans une autre variante non représentée, les unités P étant des unités d'ancrage, peuvent former un troisième bloc d'ancrage, connecté par liaison covalente au bloc épilame.

Un copolymère bloc selon la présente invention de forme (III) est par exemple un copolymère bloc qui présente la structure suivante (IIIa): 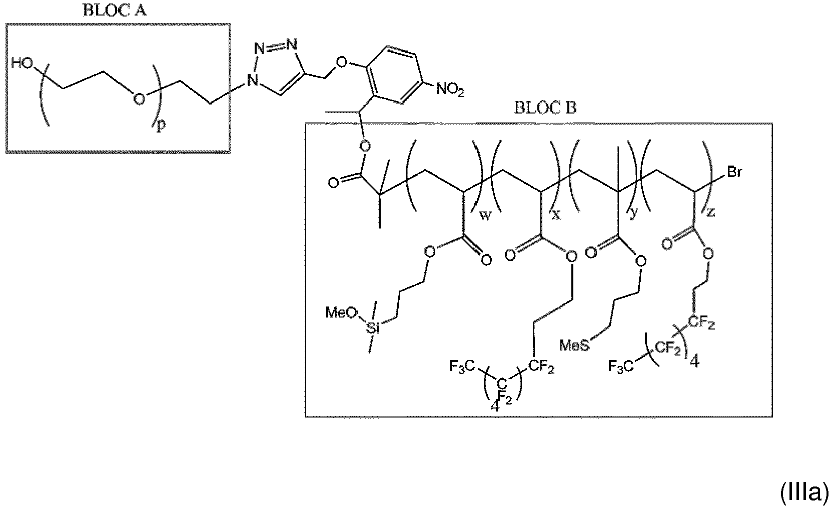 dans lequel les unités N et P forment un bloc B à effet épilame (les unités P étant des unités d'ancrage), dans lequel les unités P sont réparties de manière statistique dans le bloc B, et le bloc A hydrophile est un groupement A' hydrophile dérivé d'un PEG, les blocs A et B étant lié par un groupe clivable 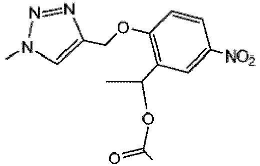 dérivé d'un nitrobenzyle ester clivables par UV, qui, après clivage, donnera un reste -COOH en bout de chaine principale du copolymère du bloc B. Un tel copolymère est obtenu par exemple par ATRP (copolymérisation radicalaire par transfert d'atomes) à partir d'un macroinitiateur PEG fonctionnel o-nitrobenzyl bromoisobutyrate, lui-même obtenu par click chemistry.

Un copolymère bloc selon la présente invention de forme (IV) est par exemple un copolymère bloc qui présente la structure suivante (IVa): 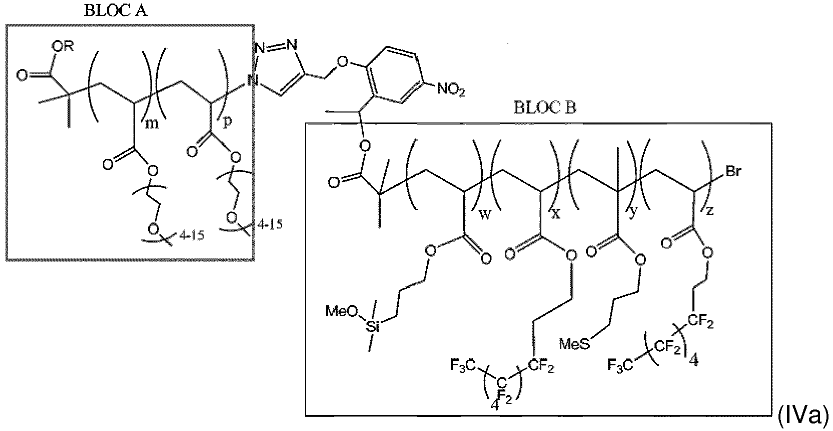 dans lequel les unités N et P forment un bloc B à effet épilame (les unités P étant des unités d'ancrage comme on le verra ci-après), dans lequel les unités P sont réparties de manière statistique dans le bloc B, et les unités G forment un bloc A hydrophile dans lequel les groupes hydrophiles sont répartis de manière statistique, lesdits groupes hydrophiles étant dérivés d'un PEG, les blocs A et B étant lié par un groupe clivable 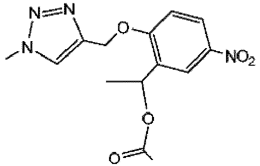 dérivé d'un nitrobenzyle ester clivables par UV, qui, après clivage, donnera un reste -COOH en bout de chaine principale du copolymère du bloc B. Un tel copolymère est obtenu par exemple par une succession ATRP / fonctionnalisation post-polymérisation / ATRP à partir d'un macro amorceur.

La présente invention concerne également un bain d'épilamage comprenant au moins 50% en volume d'eau, de préférence au moins 75%, et plus préférentiellement 100% en volume d'eau, et un agent d'épilamage tel que décrit ci-dessus, ou comprenant un copolymère tel que décrit ci-dessus, solubilisé dans ledit bain.

La présente invention concerne également un procédé d'épilamage d'au moins une partie d'une surface d'un substrat comprenant les étapes de :
a) préparation d'un bain d'épilamage par solubilisation d'au moins un agent d'épilamage tel que défini ci-dessus ou comprenant au moins un copolymère tel que défini ci-dessus dans une solution contenant au moins 50% en volume d'eau, de préférence au moins 75% en volume d'eau, et plus préférentiellement 100% en volume d'eau
b) optionnellement, préparation de la surface du substrat, notamment par nettoyage selon les procédés horlogers standards,
c) mise en contact de la surface du substrat avec l'agent d'épilamage dans le bain d'épilamage
d) optionnellement, séchage
e) séparation du groupement hydrophile de l'agent d'épilamage par clivage du groupe clivable, par exemple selon au moins un traitement de clivage tel que décrit ci-dessous, individuel, en série ou simultané
f) rinçage de la surface du substrat
g) séchage.

Il est bien évident que l'étape a) peut être mise en œuvre à distance dans le temps des autres étapes.

D'une manière avantageuse, l'étape e) est réalisée par illumination UV, activation thermique, stimulus mécanique (ultrason), traitement par enzyme, déclenchement chimique, selon la technique de clivage correspondant au groupe clivable utilisé, ou toute autre technique compatible avec l'agent d'épilamage et la surface traitée.

D'une manière avantageuse, les étapes e) et f) sont répétées jusqu'à l'élimination des résidus hydrophiles du groupement hydrophile, c'est-à-dire la partie hydrophile coupée. Par exemple, l'étape e) peut être répétée plusieurs fois avec des traitements de clivage différents, en série ou de manière simultanée. Les étapes e) et f) peuvent être répétées jusqu'à 5 fois pour laver et éliminer complètement les résidus hydrophiles.

De préférence, l'étape f) est réalisée dans une solution contenant au moins 50% d'eau, de préférence au moins 75 % d'eau, plus préférentiellement 100% d'eau.

De préférence, selon la forme du copolymère utilisé, la préparation de l'agent d'épilamage est réalisée par copolymérisation statistique ou en bloc de monomères aptes à former les unités M avec des monomères aptes à former les unités N, optionnellement avec des monomères aptes à former au moins une unité P.

Les techniques de copolymérisation statistique ou en bloc sont bien connues de l'homme du métier et ne nécessitent pas de description détaillée. Un mode de polymérisation particulièrement approprié pour la copolymérisation statistique est la copolymérisation radicalaire libre, en solution ou en émulsion.

Selon une première variante, le copolymère statistique de forme (I) peut être obtenu en une seule étape par copolymérisation, de préférence radicalaire, de monomères portant les chaines latérales Y-A avec des monomères portant les chaines latérales X-L et éventuellement des monomères portant les chaines latérales W-Q.

Selon une autre variante, le copolymère statistique de forme (I) peut être obtenu par copolymérisation, de préférence radicalaire, de monomères portant les chaines latérales Y adéquates avec des monomères portant les chaines latérales X adéquates et éventuellement des monomères portant des chaines latérales destinées à porter Q, puis les chaines latérales sont modifiées après la polymérisation (post-fonctionnalisation), par exemple par « click chemistry », pour y introduire les groupements fonctionnels d'intérêt A, L, et les groupes Q.

Un mode de polymérisation particulièrement approprié pour la copolymérisation en bloc est la copolymérisation contrôlée successive :
- de monomères aptes à former au moins un bloc d'unités M
- de monomères aptes à former au moins un bloc d'unités N, et optionnellement avec des monomères aptes à former au moins une unité P.

Deux modes de polymérisation pour la copolymérisation en bloc particulièrement appropriés sont la copolymérisation radicalaire par transfert d'atomes (ATRP) et la polymérisation radicalaire contrôlée par transfert de chaîne réversible par addition-fragmentation (RAFT), en solution ou en émulsion.

Pour le copolymère de forme (II), selon une première variante, le copolymère bloc peut être obtenu par polymérisation, de préférence radicalaire contrôlée, de monomères portant les chaines latérales Y-A, suivie de la copolymérisation, de préférence radicalaire contrôlée, de monomères portant les chaines latérales X-L avec éventuellement des monomères portant les chaines latérales W-Q.

Selon une autre variante, le copolymère bloc de forme (II) peut être obtenu par polymérisation, de préférence radicalaire contrôlée, de monomères portant les chaines latérales Y adéquates, suivie de la copolymérisation, de préférence radicalaire contrôlée, de monomères portant les chaines latérales X adéquates avec éventuellement des monomères portant des chaines latérales destinées à porter Q, puis les chaines latérales sont modifiées, par exemple par « click chemistry », pour y introduire les groupements fonctionnels d'intérêt A, L et les groupes Q.

Pour les copolymères de forme (III), le groupement A' est d'abord fonctionnalisé avec un dérivé du groupement clivable Y puis ce nouvel adduit est utilisé en tant que macro initiateur pour polymériser le bloc comprenant les unités N et optionnellement des unités P par polymérisation radicalaire contrôlée ATRP. Le dérivé du groupement clivable Y sera doublement fonctionnel : il comprendra à la fois une fonction permettant l'accroche au groupement A' et d'autre part un groupement permettant d'initier la polymérisation du bloc comprenant les unités P et N. La click chemistry pourra notamment être avantageusement utilisée pour introduire le dérivé du groupement clivable Y sur le groupement A'.

Pour les copolymères de forme (IV), le bloc comprenant les unités G est formé par polymérisation radicalaire contrôlée ATRP en utilisant un initiateur possédant un groupement fonctionnel. Ce groupement fonctionnel sert dans un deuxième temps à introduire le groupement clivable Y à l'extrémité du bloc comprenant les unités G. Tel que décrit ci-dessus ce polymère sert ensuite de macro initiateur à la polymérisation du bloc comprenant les unités P et N.

De préférence, les monomères sont choisis parmi le groupe comprenant les monomères acrylates, méthacrylates, acrylamides, méthacrylamides, vinyliques, diéniques, styréniques et oléfiniques. Les monomères acrylates, méthacrylates, acrylamides, méthacrylamides, vinyliques et styréniques sont particulièrement préférés. Ces produits sont pour la plupart connus et disponibles sur le marché ou accessibles en quelques étapes de synthèse.

Les monomères particulièrement préférés pour former les unités M sont :

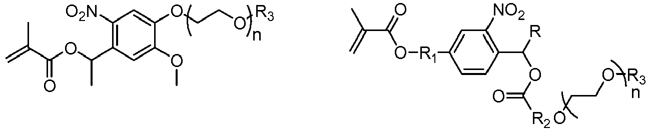

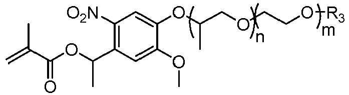

Les monomères particulièrement préférés pour former les unités G sont :

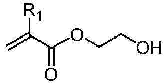

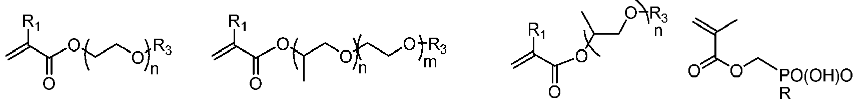

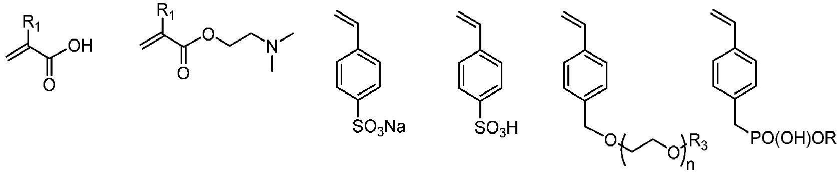

Les monomères particulièrement préférés pour former les unités N et P sont :

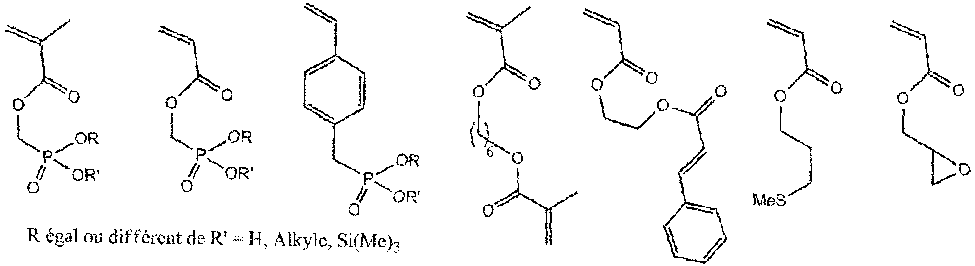

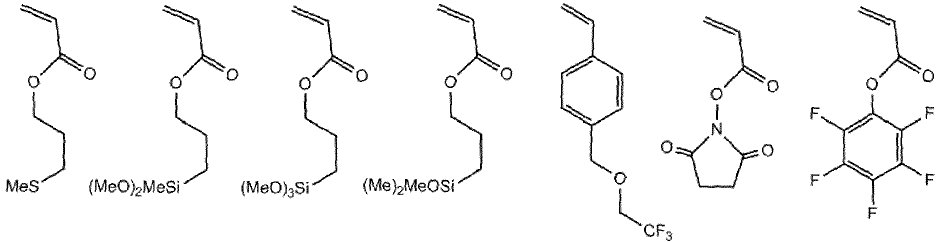

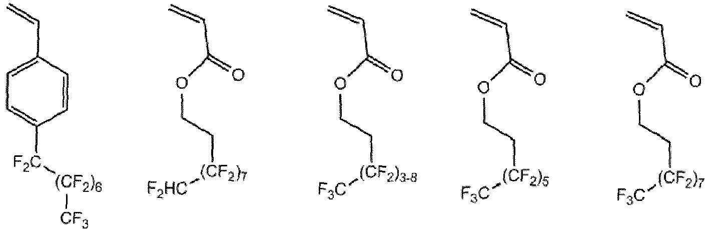

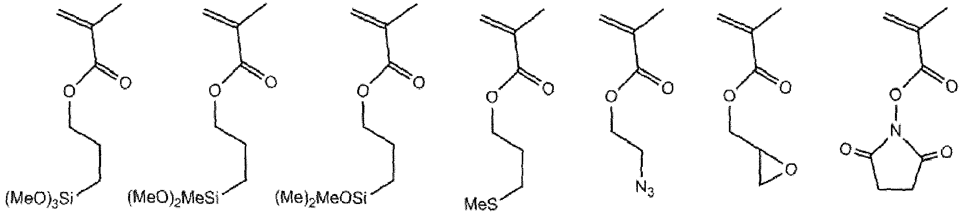

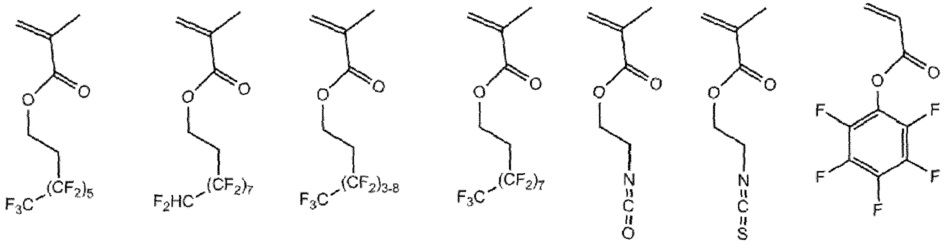

Avantageusement, les copolymères de l'invention peuvent être facilement obtenus en un nombre limité d'étapes à partir de produits commercialisés.

Les copolymères utilisés dans l'invention peuvent être obtenus sous la forme de poudre ou de liquide visqueux. Ils peuvent ensuite être mis en solution dans un solvant aqueux, à des concentrations comprises de préférence entre 50 mg/L et 900 mg/L, afin d'obtenir une solution d'agent d'épilamage, comprenant au moins 50% d'eau, de préférence 75% d'eau, et plus préférentiellement entièrement aqueuse, qui sera utilisée pour le traitement des surfaces à épilamer.

Selon les variantes, le procédé d'épilamage selon l'invention peut comprendre en outre, après l'étape g), une étape h) de réticulation complémentaire, rendue possible notamment par la présence des groupes fonctionnels d'intérêt appropriés prévus sur les chaines latérales Q des unités P.

La présente invention concerne également un substrat comprenant une surface dont au moins une partie est recouverte d'un épilame, caractérisé en ce que ledit épilame a été obtenu par clivage d'un agent d'épilamage tel que défini ci-dessus ou comprenant au moins un copolymère tel que défini ci-dessus, ledit épilame comprenant au moins un composé comprenant au moins des groupements hydrophobes et oléophobes et au moins un reste d'un groupe clivable qui a été utilisé pour lier au moins un groupement hydrophile audit composé.

Plus particulièrement, lorsque l'agent d'épilamage comprend un copolymère tel que décrit ci-dessus, l'épilame comprend au moins un composé sous la forme d'un copolymère comprenant des unités N, et optionnellement au moins une unité P, associées par liaisons covalentes par leurs chaines principales, et au moins un reste d'un groupe clivable, où N et P sont tels que définis ci-dessus. Selon la forme du copolymère utilisé dans l'agent d'épilamage, le reste du groupe clivable est en bout de la chaine principale du copolymère ou en bout d'une chaine latérale du copolymère, ledit copolymère ne comprenant alors plus que des groupements hydrophobes et oléophobes à effet épilame.

En fonction du groupe clivable utilisé, le reste du groupe clivable est par exemple -COOH, -SH, 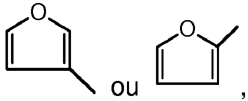 ou autre reste approprié, en bout de la chaine principale du copolymère ou en bout d'une chaine latérale du copolymère, ledit copolymère ne comprenant alors plus que, ou très majoritairement, des groupements hydrophobes et oléophobes à effet épilame.

De préférence, la surface du substrat dont au moins une partie est recouverte de l'épilame est réalisée dans un matériau choisi parmi le groupe comprenant les métaux, les oxydes métalliques, dopés ou non, les polymères, le diamant, le saphir, le quartz, le rubis, le silicium, les oxydes de silicium, les nitrures métalliques, notamment les nitrures de titane, les nitrures de silicium, les carbures métalliques, notamment les carbures de tungstène, les borures métalliques, notamment les borures de tantale, les carbures de silicium, les DLC (Diamond Like Carbon), et leurs alliages.

Plus précisément, la surface du substrat peut être réalisée en acier, ou en métaux nobles tels que or, argent, rhodium, palladium, platine, ou en oxydes métalliques, dopés ou non d'aluminium, zirconium, titane, chrome, manganèse, magnésium, fer, nickel, cuivre, zinc, molybdène, argent, tungstène, ou en polyoxyméthylène ou en acrylamide, ainsi que leurs alliages.

Le substrat selon l'invention présente une surface recouverte d'un épilame simple et économique à synthétiser, présentant une affinité avec tout type de substrat et une résistance aux lavages améliorée par rapport aux épilames connus. Un élément ou une pièce présentant un substrat conforme à l'invention peut être utilisé dans tout type d'applications dans le domaine mécanique, et plus particulièrement dans la mécanique de précision, et notamment l'horlogerie et la bijouterie.

De plus, le procédé selon l'invention, en utilisant l'agent d'épilamage ou un copolymère selon l'invention, est écologique, ledit agent d'épilamage ou ledit copolymère étant soluble dans un bain d'épilamage aqueux.

## Revendications

1. Agent d'épilamage comprenant au moins un composé comprenant au moins des groupements hydrophobes et oléophobes agencés pour conférer des propriétés épilames audit composé, et au moins un groupement hydrophile agencé pour rendre ledit composé soluble en milieu aqueux, ledit groupement hydrophile étant lié au composé par au moins un groupe clivable.

2. Agent d'épilamage selon la revendication 1, **caractérisé en ce que** les groupements hydrophobes et oléophobes, identiques ou différents, comprennent un groupement carboné en C₁-C₂₀ halogéné, de préférence fluoré.

3. Agent d'épilamage selon l'une des revendications 1 et 2, **caractérisé en ce que** le groupement hydrophile est choisi parmi le groupe comprenant un groupement dérivé d'un éther de glycol, de préférence se présentant sous la forme d'un groupement dérivé d'un polyéther, de préférence un groupement dérivé d'un polyéthylène glycol (PEG) ou d'un polypropylène glycol (PPG), un groupement dérivé d'une amine, de préférence se présentant sous la forme d'un groupement dérivé d'une polyamine, un groupement dérivé d'un alcool, d'un acide carboxylique, d'un acide sulfonique, d'un acide phosphonique, d'un sel de carboxylate, d'un sel de sulfonate, et d'un sel de phosphonate.

4. Agent d'épilamage selon l'une des revendications précédentes, **caractérisé en ce que** le groupe clivable est un groupe clivable par au moins l'un des traitements choisi parmi le groupe comprenant un traitement UV, un traitement thermique, un traitement par stimulus mécanique, un traitement par enzyme, et un traitement par déclencheur chimique.

5. Agent d'épilamage selon la revendication 4, **caractérisé en ce que** le groupe clivable est choisi parmi le groupe comprenant un groupement dérivé d'un nitrobenzyle ester, un adduit d'une réaction de Diels Aider, et un groupement comprenant une fonction dithio.

6. Agent d'épilamage selon l'une des revendications précédentes, **caractérisé en ce que** le groupe clivable avec le groupement hydrophile associé forment une structure linéaire ou ramifiée avec le composé.

7. Agent d'épilamage selon l'une des revendications précédentes, **caractérisé en ce que** les groupements hydrophobes et oléophobes forment une structure linéaire ou ramifiée avec le composé.

8. Copolymère comprenant des unités M, des unités N, et optionnellement au moins une unité P, associées par liaisons covalentes par leurs chaines principales, où
M est 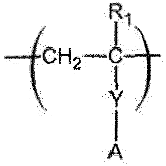 N est 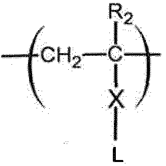 P est 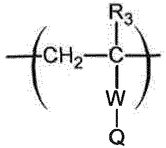 où R₁, R₂, R₃, identiques ou différents, sont H, un groupe alkyle en C₁-C₁₀, alkényle en C₁-C₁₀, et de préférence H, CH₃
W, X, identiques ou différents, sont des bras espaceurs constitués d'un hétéroatome ou d'une chaîne hydrocarbonée pouvant contenir au moins un hétéroatome, linéaire ou ramifiée, comprenant au moins un atome de carbone
Y, identique ou différent, est un groupement comprenant au moins un groupe clivable
A, identique ou différent, est un groupement hydrophile agencé pour rendre ledit copolymère soluble en milieu aqueux
L, identique ou différent, est un groupement carboné en C₁-C₂₀ halogéné, de préférence fluoré
Q, identique ou différent, est H, CH₃, une chaîne hydrocarbonée pouvant contenir au moins un hétéroatome, linéaire ou ramifiée, saturée ou insaturée, comprenant au moins 1 atome de carbone.

9. Copolymère bloc comprenant au moins un bloc d'unités N comprenant optionnellement au moins une unité P, associées par liaisons covalentes par leurs chaines principales, et au moins un bloc comprenant au moins un groupement hydrophile agencé pour rendre ledit copolymère soluble en milieu aqueux, lesdits blocs étant liés entre eux par liaisons covalentes par au moins un groupe clivable Y, où N, P, et Y sont tels que définis à la revendication 8.

10. Copolymère bloc selon la revendication 9, **caractérisé en ce que** le bloc comprenant au moins un groupement hydrophile est un groupement A' choisi parmi le groupe comprenant au moins un groupement dérivé d'un éther de glycol, de préférence se présentant sous la forme d'un groupement dérivé d'un polyéther, de préférence un groupement dérivé d'un polyéthylène glycol (PEG) ou d'un polypropylène glycol (PPG), et un groupement dérivé d'une amine, de préférence se présentant sous la forme d'un groupement dérivé d'une polyamine, ledit copolymère bloc répondant à la formule (III) :

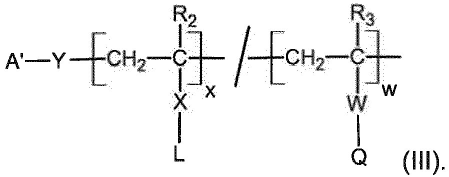

11. Copolymère bloc selon la revendication 9, **caractérisé en ce que** le bloc comprenant au moins un groupement hydrophile comprend des unités G associées par liaisons covalentes par leurs chaines principales,
où G est 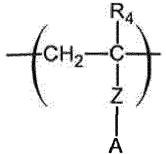 où R₄, identique ou différent, est H, un groupe alkyle en C₁-C₁₀, alkényle en C₁-C₁₀, et de préférence H, CH₃
Z, identique ou différent, est un bras espaceur constitué d'un hétéroatome ou d'une chaîne hydrocarbonée pouvant contenir au moins un hétéroatome, linéaire ou ramifiée, comprenant au moins un atome de carbone
A est tel que défini ci-dessus.

12. Copolymère selon l'une des revendications 8 à 11, **caractérisé en ce que** W, X, Z, identiques ou différents, sont choisis parmi le groupe comprenant des groupes esters en C₁-C₂₀, de préférence en C₂-C₁₀, des groupes amides, et des groupes dérivés du styrène.

13. Copolymère selon l'une des revendications 8 à 12, **caractérisé en ce que** Y est un groupement comprenant un groupe clivable par au moins l'un des traitements choisi parmi le groupe comprenant un traitement UV, un traitement thermique, un traitement par stimulus mécanique, un traitement par enzyme, et un traitement par déclencheur chimique.

14. Copolymère selon la revendication 13, **caractérisé en ce que** Y est un groupement comprenant un groupe clivable choisi parmi le groupe comprenant un groupement dérivé d'un nitrobenzyle ester, un adduit d'une réaction de Diels Aider, et un groupement comprenant une fonction dithio.

15. Copolymère selon l'une des revendications 8 à 14, **caractérisé en ce que** A est un groupement hydrophile choisi parmi le groupe comprenant un groupement dérivé d'un éther de glycol, de préférence se présentant sous la forme d'un groupement dérivé d'un polyéther, de préférence un groupement dérivé d'un polyéthylène glycol (PEG) ou d'un polypropylène glycol (PPG), un groupement dérivé d'une amine, se présentant de préférence sous la forme d'un groupement dérivé d'une polyamine, un groupement dérivé d'un alcool, d'un acide carboxylique, d'un acide sulfonique, d'un acide phosphonique, d'un sel de carboxylate, d'un sel de sulfonate et d'un sel de phosphonate.

16. Copolymère selon l'une des revendications 8 à 15, **caractérisé en ce que** L est un groupement carboné en C₂-C₂₀, de préférence en C₄-C₁₀.

17. Copolymère selon l'une des revendications 8 à 16, **caractérisé en ce que** L est un groupement au moins partiellement fluoré, de préférence totalement fluoré.

18. Copolymère selon l'une des revendications 8 à 17, **caractérisé en ce que** Q, identique ou différent, constitue un groupement d'ancrage, et est choisi parmi le groupe comprenant les thiols, thioethers, thioesters, sulfures, thioamides, silanols, alkoxysilanes, halogénures de silane, hydroxyles, phosphates, acides phosphoniques protégés ou non, phosphonates protégés ou non, aminés, ammoniums, hétérocycles azotés, acides carboxyliques, anhydrides, catéchols.

19. Agent d'épilamage selon la revendication 1, dans lequel le composé est un copolymère selon l'une des revendications 8 à 18.

20. Bain d'épilamage comprenant au moins 50% en volume d'eau et un agent d'épilamage selon l'une des revendications 1 à 7 ou 19 solubilisé.

21. Utilisation d'un composé comprenant au moins des groupements hydrophobes et oléophobes agencés pour conférer audit composé des propriétés épilames, et au moins un groupement hydrophile agencé pour rendre ledit composé soluble en milieu aqueux, ledit groupement hydrophile étant lié au composé par au moins un groupe clivable, comme agent d'épilamage.

22. Utilisation d'un copolymère selon l'une des revendications 8 à 18 comme agent d'épilamage.

23. Procédé d'épilamage d'au moins une partie d'une surface d'un substrat comprenant les étapes de :
a) préparation d'un bain d'épilamage par solubilisation d'au moins un agent d'épilamage selon l'une des revendications 1 à 7 ou comprenant au moins un copolymère tel que défini aux revendications 8 à 18 dans une solution contenant au moins 50% en volume d'eau
b) optionnellement, préparation de la surface du substrat
c) mise en contact de la surface du substrat avec l'agent épilamage dans le bain d'épilamage
d) optionnellement, séchage
e) séparation du groupement hydrophile de l'agent d'épilamage par clivage
f) rinçage de la surface du substrat
g) séchage.

24. Procédé d'épilamage selon la revendication 23, **caractérisé en ce que** les étapes e) et f) sont répétées jusqu'à l'élimination des résidus hydrophiles du groupement hydrophile.

25. Procédé d'épilamage selon l'une des revendications 23 et 24, **caractérisé en ce que** l'étape f) est réalisée dans une solution contenant au moins 50% d'eau.

26. Substrat comprenant une surface dont au moins une partie est recouverte d'un épilame, **caractérisé en ce que** ledit épilame a été obtenu par clivage d'un agent d'épilamage selon l'une des revendications 1 à 7 ou comprenant au moins un copolymère tel que défini aux revendications 8 à 18, ledit épilame comprenant au moins un composé comprenant au moins des groupements hydrophobes et oléophobes et au moins un reste d'un groupe clivable qui a été utilisé pour lier au moins un groupement hydrophile audit composé.

27. Substrat selon la revendication 26, **caractérisé en ce que** l'épilame comprend au moins un composé sous la forme d'un copolymère comprenant des unités N, et optionnellement au moins une unité P, associées par liaisons covalentes par leurs chaines principales, et au moins un reste d'un groupe clivable, où N et P sont tels que définis ci-dessus.

28. Substrat selon la revendication 27, **caractérisé en ce que** le reste du groupe clivable est en bout de la chaine principale du copolymère ou en bout d'une chaine latérale du copolymère.

29. Substrat selon l'une des revendications 26 à 28, **caractérisé en ce que** sa surface dont au moins une partie est recouverte de l'épilame est réalisée dans un matériau choisi parmi le groupe comprenant les métaux, les oxydes métalliques, les nitrures métalliques, les borures métalliques, les carbures métalliques, les polymères, le diamant, le saphir, le rubis, le quartz, le silicium, les oxydes de silicium, les nitrures de silicium, les carbures de silicium, les DLC (Diamond Like Carbon), et leurs alliages.

30. Pièce d'horlogerie ou de bijouterie comprenant un élément comportant un substrat selon l'une quelconque des revendications 26 à 29.

## Patentansprüche

1. Epilamisierungsmittel, enthaltend mindestens eine Verbindung, die mindestens hydrophobe und oleophobe Gruppierungen, die dazu vorgesehen sind, der Verbindung epilamisierende Eigenschaften zu verleihen, und mindestens eine hydrophile Gruppierung enthält, die dazu vorgesehen ist, die Verbindung in wässrigem Milieu löslich zu machen, wobei die hydrophile Gruppierung an die Verbindung über mindestens eine abspaltbare Gruppe gebunden ist.

2. Epilamisierungsmittel nach Anspruch 1, **dadurch gekennzeichnet, dass** die gleichen oder unterschiedlichen hydrophoben und oleophoben Gruppierungen eine halogenierte, vorzugsweise fluorierte Kohlenstoffgruppierung mit C₁-C₂₀ enthalten.

3. Epilamisierungsmittel nach einem der Ansprüche 1 und 2, **dadurch gekennzeichnet, dass** die hydrophile Gruppierung aus der Gruppe ausgewählt ist, die eine von einem Glykolether abgeleitete Gruppierung, die vorzugsweise die Form einer von einem Polyether abgeleiteten Gruppierung aufweist, vorzugsweise eine von einem Polyethylenglykol (PEG) oder von einem Polypropylenglykol (PPG) abgeleitete Gruppierung, eine von einem Amin abgeleitete Gruppierung, die vorzugsweise die Form einer von einem Polyamin abgeleiteten Gruppierung aufweist, und eine von einem Alkohol, einer Carboxylsäure, einer Sulfonsäure, einer Phosphonsäure, einem Carboxylatsalz, einem Sulfonatsalz und einem Phosphonatsalz abgeleitete Gruppierung umfasst.

4. Epilamisierungsmittel nach einem der vorhergehenden Ansprüche, **dadurch gekennzeichnet, dass** die abspaltbare Gruppe eine Gruppe ist, die durch mindestens eine der Behandlungen abspaltbar ist, die aus der Gruppe ausgewählt sind, die eine UV-Behandlung, eine Wärmebehandlung, eine mechanische Reizbehandlung, eine Enzymbehandlung und eine chemische Trigger-Behandlung umfasst.

5. Epilamisierungsmittel nach Anspruch 4, **dadurch gekennzeichnet, dass** die abspaltbare Gruppe aus der Gruppe ausgewählt ist, die eine von einem Nitrobenzyl-Ester abgeleitete Gruppierung, ein Addukt einer Diels-Alder-Reaktion und eine Gruppierung, die eine Dithio-Funktion enthält, umfasst.

6. Epilamisierungsmittel nach einem der vorhergehenden Ansprüche, **dadurch gekennzeichnet, dass** die abspaltbare Gruppe gemeinsam mit der zugeordneten hydrophilen Gruppierung mit der Verbindung eine lineare oder verzweigte Struktur bildet.

7. Epilamisierungsmittel nach einem der vorhergehenden Ansprüche, **dadurch gekennzeichnet, dass** die hydrophoben und oleophoben Gruppierungen mit der Verbindung eine lineare oder verzweigte Struktur bilden.

8. Copolymer, das Einheiten M, Einheiten N und optional mindestens eine Einheit P umfasst, die durch kovalente Bindungen über ihre Hauptketten gebunden sind, wobei 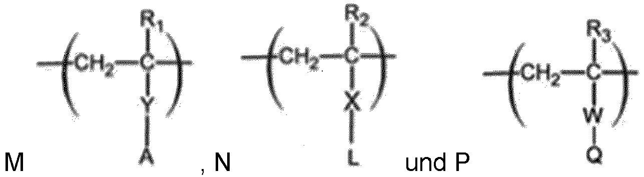 ist,
wobei R₁, R₂, R₃, die gleich oder unterschiedlich sind, H, eine Alkylgruppe mit C₁-C₁₀, Alkenyl mit C₁-C₁₀ und vorzugsweise H, CH₃ sind,
W, X, die gleich oder unterschiedlich sind, Abstandshalterarme sind, die durch ein Heteroatom oder eine Kohlenwasserstoffkette, die mindestens ein lineares oder verzweigtes Heteroatom enthalten kann, das mindestens ein Kohlenstoffatom enthält, gebildet sind,
Y, das gleich oder unterschiedlich ist, eine Gruppierung ist, die mindestens eine abspaltbare Gruppe enthält,
A, das gleich oder unterschiedlich ist, eine hydrophile Gruppierung ist, die dazu vorgesehen ist, das Copolymer in wässrigem Milieu löslich zu machen,
L, das gleich oder unterschiedlich ist, eine halogenierte, vorzugsweise fluorierte Kohlenstoffgruppierung mit C₁-C₂₀ ist,
Q, das gleich oder unterschiedlich ist, H, CH₃ ist, wobei eine Kohlenwasserstoffkette, die mindestens ein lineares oder verzweigtes Heteroatom enthalten kann, das gesättigt oder ungesättigt ist und mindestens ein Kohlenstoffatom enthält.

9. Blockcopolymer mit mindestens einem Block von Einheiten N, optional mit mindestens einer Einheit P, die über kovalente Bindungen über ihre Hauptketten gebunden sind, und mindestens einem Block, der mindestens eine hydrophile Gruppierung enthält, die dazu vorgesehen ist, das Copolymer in wässrigem Milieu löslich zu machen, wobei die Blöcke über kovalente Bindungen durch mindestens eine abspaltbare Gruppe Y miteinander verbunden sind, wobei N, P und Y wie in Anspruch 8 definiert sind.

10. Blockcopolymer nach Anspruch 9, **dadurch gekennzeichnet, dass** der Block, der mindestens eine hydrophile Gruppierung enthält, eine Gruppierung A' ist, ausgewählt aus der Gruppe, die mindestens eine von einem Glykolether abgeleitete Gruppierung, die vorzugsweise die Form einer von einem Polyether abgeleiteten Gruppierung aufweist, vorzugsweise eine von einem Polyethylenglykol (PEG) oder von einem Polypropylenglykol (PPG) abgeleitete Gruppierung und eine von einem Amin abgeleitete Gruppierung, die vorzugsweise die Form einer von einem Polyamin abgeleiteten Gruppierung aufweist, umfasst, wobei das Blockcopolymer die folgende Formel (III) besitzt:

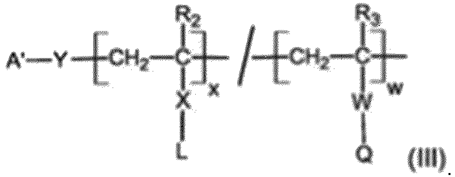

11. Blockcopolymer nach Anspruch 9, **dadurch gekennzeichnet, dass** der Block mindestens eine hydrophile Gruppierung enthält, die Einheiten G enthält, die über kovalente Bindungen über ihre Hauptketten gebunden sind, wobei 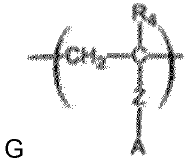 ist,
wobei R₄, das gleich oder unterschiedlich ist, H, eine Alkylgruppe mit C₁-C₁₀, Alkenyl mit C₁-C₁₀ und vorzugsweise H, CH₃ ist,
Z, das gleich oder unterschiedlich ist, ein Abstandshalterarm ist, der gebildet ist aus einem Heteroatom oder einer Kohlenwasserstoffkette, die mindestens ein lineares oder verzweigtes Heteroatom enthalten kann, das mindestens ein Kohlenstoffatom enthält,
A wie oben definiert ist.

12. Copolymer nach einem der Ansprüche 8 bis 11, **dadurch gekennzeichnet, dass** W, X, Z, die gleich oder unterschiedlich sind, aus der Gruppe gewählt sind, die Estergruppen mit C₁-C₂₀, vorzugsweise mit C₂-C₁₀, Amidgruppen und von Styrol abgeleitete Gruppen enthält.

13. Copolymer nach einem der Ansprüche 8 bis 12, **dadurch gekennzeichnet, dass** Y eine Gruppierung ist, die eine Gruppe enthält, die durch mindestens eine der Behandlungen abspaltbar ist, die aus der Gruppe ausgewählt sind, die eine UV-Behandlung, eine Wärmebehandlung, eine mechanische Reizbehandlung, eine Enzymbehandlung und eine chemische Trigger-Behandlung umfasst.

14. Copolymer nach Anspruch 13, **dadurch gekennzeichnet, dass** Y eine Gruppierung ist, die eine abspaltbare Gruppe enthält, die aus der Gruppe ausgewählt ist, die eine von einem Nitrobenzyl-Ester abgeleitete Gruppierung, ein Addukt einer Diels-Alder-Reaktion und eine Gruppierung, die eine Dithio-Funktion enthält, umfasst.

15. Copolymer nach einem der Ansprüche 8 bis 14, **dadurch gekennzeichnet, dass** A eine hydrophile Gruppierung ist, die aus der Gruppe gewählt ist, die eine von einem Glykolether abgeleitete Gruppierung, die vorzugsweise die Form einer von einem Polyether abgeleiteten Gruppierung aufweist, vorzugsweise einer von einem Polyethylenglykol (PEG) oder von einem Polypropylenglykol (PPG) abgeleiteten Gruppierung, eine von einem Amin abgeleitete Gruppierung, die vorzugsweise die Form einer von einem Polyamin abgeleiteten Gruppierung aufweist, und eine von einem Alkohol, einer Carboxylsäure, einer Sulfonsäure, einer Phosphonsäure, einem Carboxylatsalz, einem Sulfonatsalz und einem Phosphonatsalz abgeleitete Gruppierung umfasst.

16. Copolymer nach einem der Ansprüche 8 bis 15, **dadurch gekennzeichnet, dass** L eine Kohlenstoffgruppierung mit C₂-C₂₀, vorzugsweise mit C4-C10 ist.

17. Copolymer nach einem der Ansprüche 8 bis 16, **dadurch gekennzeichnet, dass** L eine Gruppierung ist, die mindestens teilweise und vorzugsweise vollständig fluoriert ist.

18. Copolymer nach einem der Ansprüche 8 bis 17, **dadurch gekennzeichnet**, das Q, das gleich oder unterschiedlich ist, eine Ankergruppe bildet und aus der Gruppe ausgewählt ist, die Thiole, Thioether, Thioester, Sulfid, Thionamide, Silanole, Alkoxysilane, Silanhalogenide, Hydroxyle, Phosphate, geschützte oder ungeschützte Phosphonsäuren, geschützte oder ungeschützte Phosphonate, Amine, Ammonium, stickstoffhaltige Heterozyklen, Carboxylsäuren, Anhydride und Brenzcatechine umfasst.

19. Epilamisierungsmittel nach Anspruch 1, wobei die Verbindung ein Copolymer nach einem der Ansprüche 8 bis 18 ist.

20. Epilamisierungsbad, das mindestens 50 Vol.-% Wasser und ein gelöstes Epilamisierungsmittel nach einem der Ansprüche 1 bis 7 oder 19, enthält.

21. Verwendung einer Verbindung als Epilamisierungsmittel, die mindestens hydrophobe und oleophobe Gruppierungen, die dazu vorgesehen sind, der Verbindung epilamisierende Eigenschaften zu verleihen, und mindestens eine hydrophile Gruppierung, die dazu vorgesehen ist, die Verbindung in wässrigem Milieu löslich zu machen, enthält, wobei die hydrophile Gruppierung an die Verbindung über mindestens eine abspaltbare Gruppe gebunden ist.

22. Verwendung eines Copolymers als Epilamisierungsmittel nach einem der Ansprüche 8 bis 18.

23. Verfahren zum Epilamisieren mindestens eines Teils einer Oberfläche eines Substrats, umfassend die folgenden Schritte:
a) Herstellen eines Epilamisierungsbades durch Auflösen mindestens eines Epilamisierungsmittels nach einem der Ansprüche 1 bis 7 oder umfassend mindestens ein Copolymer, wie es in den Ansprüchen 8 bis 18 definiert ist, in einer mindestens 50 Vol.-% Wasser enthaltenden Lösung,
b) optional Vorbereiten der Oberfläche des Substrats,
c) Herstellen eines Kontakts zwischen der Oberfläche des Substrats und dem Epilamisierungsmittel in dem Epilamisierungsbad,
d) optional Trocknen,
e) Trennen der hydrophilen Gruppierung von dem Epilamisierungsmittel durch Abspalten,
f) Spülen der Oberfläche des Substrats,
g) Trocknen.

24. Epilamisierungsverfahren nach Anspruch 23, **dadurch gekennzeichnet, dass** die Schritte e) und f) wiederholt werden, bis die hydrophilen Reste der hydrophilen Gruppierung beseitigt sind.

25. Epilamisierungsverfahren nach einem der Ansprüche 23 und 24, **dadurch gekennzeichnet, dass** der Schritt f) in einer Lösung ausgeführt wird, die mindestens 50 % Wasser enthält.

26. Substrat mit einer Oberfläche, die zumindest teilweise mit einem Epilam bedeckt ist, **dadurch gekennzeichnet, dass** das Epilam erhalten wird durch Abspalten eines Epilamisierungsmittels, das nach einem der Ansprüche 1 bis 7 beschaffen ist oder mindestens ein Copolymer enthält, wie es in den Ansprüchen 8 bis 18 definiert ist, wobei das Epilam mindestens eine Verbindung enthält, die mindestens hydrophobe und oleophobe Gruppierungen und mindestens einen Rest einer abspaltbaren Gruppe, die verwendet worden ist, um mindestens eine hydrophile Gruppierung an die Verbindung zu binden, enthält.

27. Substrat nach Anspruch 26, **dadurch gekennzeichnet, dass** das Epilam mindestens eine Verbindung in Form eines Copolymers, das Einheiten N und optional mindestens eine Einheit P enthält, die über kovalente Bindungen über ihre Hauptketten gebunden sind, und mindestens einen Rest einer abspaltbaren Gruppe enthält, wobei N und P wie oben definiert sind.

28. Substrat nach Anspruch 27, **dadurch gekennzeichnet, dass** sich der Rest der abspaltbaren Gruppe am Ende der Hauptkette des Copolymers oder am Ende einer Seitenkette des Copolymers befindet.

29. Substrat nach einem der Ansprüche 26 bis 28, **dadurch gekennzeichnet, dass** die Oberfläche, die zumindest teilweise mit einem Epilam bedeckt ist, aus einem Material hergestellt ist, das aus der Gruppe gewählt ist, die Metalle, Metalloxide, Metallnitride, Metallboride, Metallcarbide, Polymere, Diamant, Saphir, Rubin, Quarz, Silicium, Siliciumoxide, Siliciumnitride, Siliciumcarbide, DLC (Diamond like Carbon) und ihre Legierungen umfasst.

30. Uhr oder Schmuckteil, umfassend ein Element, das ein Substrat nach einem der Ansprüche 26 bis 29 enthält.

## Claims

1. Epilamization agent containing at least one compound including at least hydrophobic and oleophobic moieties arranged to impart epilame properties to said compound, and at least one hydrophilic moiety arranged to make said compound soluble in aqueous medium, said hydrophilic moiety being linked to the compound by at least one cleavable group.

2. Epilamization agent according to claim 1, **characterized in that** the hydrophobic and oleophobic moieties, which may be identical or different, contain a halogenated, preferably fluorinated, C₁-C₂₀ carbon moiety.

3. Epilamization agent according to any of claims 1 and 2, **characterized in that** the hydrophilic moiety is chosen from the group comprising a moiety derived from a glycol ether, preferably taking the form of a moiety derived from a polyether, preferably a moiety derived from a polyethylene glycol (PEG) or from a polypropylene glycol (PPG), a moiety derived from an amine, preferably taking the form of a moiety derived from a polyamine, a moiety derived from an alcohol, from a carboxylic acid, from a sulfonic acid, from a phosphonic acid, from a carboxylate salt, from a sulfonate salt, and from a phosphonate salt.

4. Epilamization agent according to any of the preceding claims, **characterized in that** the cleavable group is a group that can be cleaved by at least one of the treatments selected from the group including a UV treatment, a thermal treatment, a mechanical stimuli treatment, an enzyme treatment, and a chemical trigger treatment.

5. Epilamization agent according to claim 4, **characterized in that** the cleavable group is chosen from the group comprising a moiety derived from a nitrobenzyl ester, a Diels Alder adduct, and a moiety including a dithio function.

6. Epilamization agent according to any of the preceding claims, **characterized in that** the cleavable group with the associated hydrophilic moiety form a linear or branched structure with the compound.

7. Epilamization agent according to any of the preceding claims, **characterized in that** the hydrophobic and oleophobic moieties form a linear or branched structure with the compound.

8. Copolymer including M units, N units and optionally at least one P unit, linked by covalent bonds by their main chains, where
M is 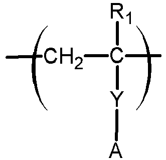 N is 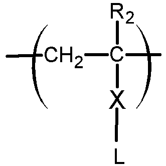 P is 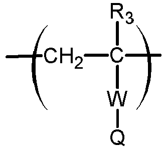 where R₁, R₂, R₃, which may be identical or different, are H, a C₁-C₁₀ alkyl group, C₁-C₁₀ alkenyl group, and preferably H, CH₃;
W, X, which may be identical or different, are spacer arms formed of a heteroatom or of a linear or branched hydrocarbon chain comprising at least one carbon atom, and that may contain at least one heteroatom;
Y, which may be identical or different, is a moiety comprising at least one cleavable group;
A, which may be identical or different, is a hydrophilic moiety arranged to make said copolymer soluble in aqueous medium;
L, which may be identical or different, is a halogenated, preferably fluorinated, C₁-C₂₀ carbon moiety;
Q, which may be identical or different, is H, CH₃, a linear or branched, saturated or unsaturated hydrocarbon chain, comprising at least one carbon atom, and that may contain at least one heteroatom.

9. Block copolymer comprising at least one block of N units optionally including at least one P unit, linked by covalent bonds by their main chains, and at least one block including at least one hydrophilic moiety arranged to make said copolymer soluble in aqueous medium, said blocks being linked to each other by covalent bonds by at least one cleavable group Y, wherein N, P and Y are as defined in claim 8.

10. Block copolymer according to claim 9, **characterized in that** the block including at least one hydrophilic moiety is an A' moiety selected from the group including at least one moiety derived from a glycol ether, preferably taking the form of a moiety derived from a polyether, preferably a moiety derived from a polyethylene glycol (PEG) or a polypropylene glycol (PPG), and a moiety derived from an amine, preferably taking the form of a moiety derived from a polyamine, said block copolymer responding to the formula (III) :

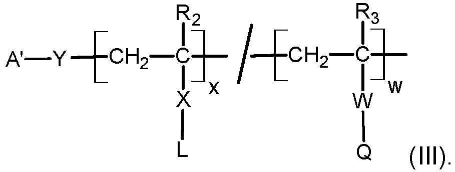

11. Block copolymer according to claim 9, **characterized in that** the block including at least one hydrophilic moiety includes G units linked by covalent bonds by their main chains,
where G is 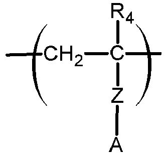 where R₄, which may be identical or different, is a C₁-C₁₀ alkyl, C₁-C₁₀ alkenyl group, and preferably H, CH₃;
Z, which may be identical or different, is a spacer arm formed of a heteroatom or of a linear or branched hydrocarbon chain comprising at least one carbon atom, and that may contain at least one heteroatom;
A is as defined above.

12. Copolymer according to any of claims 8 to 11, **characterized in that** W, X, Z, which may be identical or different, are selected from the group including C₁-C₂₀, preferably C₂-C₁₀, ester groups, amide groups, and groups derived from styrene.

13. Copolymer according to any of claims 8 to 12, **characterized in that** Y is a moiety including a group that can be cleaved by at least one of the treatments selected from the group including a UV treatment, a thermal treatment, a mechanical stimuli treatment, an enzyme treatment, and a chemical trigger treatment.

14. Copolymer according to claim 13, **characterized in that** Y is a moiety including a cleavable group chosen from the group including a moiety derived from a nitrobenzyl ester, a Diels Alder adduct, and a moiety including a dithio function.

15. Copolymer according to any of claims 8 to 14, **characterized in that** A is a hydrophilic moiety chosen from the group including a moiety derived from a glycol ether, preferably taking the form of a moiety derived from a polyether, preferably a moiety derived from a polyethylene glycol (PEG) or from a polypropylene glycol (PPG), a moiety derived from an amine, preferably taking the form of a moiety derived from a polyamine, a moiety derived from an alcohol, from a carboxylic acid, from a sulfonic acid, from a phosphonic acid, from a carboxylate salt, from a sulfonate salt, and from a phosphonate salt.

16. Copolymer according to any of claims 8 to 15, **characterized in that** L is a C₂-C₂₀, preferably C₄-C₁₀, carbon moiety.

17. Copolymer according to any of claims 8 to 16, **characterized in that** L is an at least partially fluorinated, preferably completely fluorinated moiety.

18. Copolymer according to any of claims 8 to 17, **characterized in that** Q, which may be identical or different, forms an anchoring moiety, and is chosen from the group including thiols, thioethers, thioesters, sulphides, thioamides, silanols, alkoxysilanes, silane halides, hydroxyls, phosphates, protected or non-protected phosphonic acids, protected or non-protected phosphonates, amines, ammoniums, nitrogenated heterocycles, carboxylic acids, anhydrides, catechols.

19. Epilamization agent according to claim 1, wherein the compound is a copolymer according to any of claims 8 to 18.

20. Epilamization bath including at least 50% by volume of water and a solubilised epilamization agent according to any of claims 1 to 7 or 19.

21. Use of a compound containing at least hydrophobic and oleophobic moieties arranged to impart epilame properties to said compound, and at least one hydrophilic moiety arranged to make said compound soluble in aqueous medium, said hydrophilic moiety being linked to the compound by at least one cleavable group, as epilamization agent.

22. Use of a copolymer according to any of claims 8 to 18 as epilamization agent.

23. Method for coating with epilame at least one part of a substrate surface including the steps of:
a) preparing an epilamization bath by solubilising at least one epilamization agent according to any of claims 1 to 7 or containing at least one copolymer as defined in claims 8 to 18 in a solution containing at least 50% by volume of water
b) optionally, preparing the substrate surface
c) placing the substrate surface in contact with the epilamization agent in the epilamization bath
d) optionally, drying
e) separating the hydrophilic moiety from the epilamization agent by cleavage
f) rinsing the substrate surface
g) drying.

24. Epilamization method according to claim 23, **characterized in that** steps e) and f) are repeated until the hydrophilic residues are eliminated from the hydrophilic moiety.

25. Epilamization method according to any of claims 23 and 24, **characterized in that** step f) is performed in a solution containing at least 50% water.

26. Substrate having a surface at least part of which is coated with an epilame, **characterized in that** said epilame was obtained by cleaving an epilamization agent according to any of claims 1 to 7 or or containing at least one copolymer as defined in claims 8 to 18, said epilame containing at least one compound containing at least hydrophobic and oleophobic moieties and at least one remainder of a cleavable group which was used to link at least one hydrophilic moiety to said compound.

27. Substrate according to claim 26, **characterized in that** the epilame includes at least one compound in the form of a copolymer including N units, and optionally at least one P unit, linked by covalent bonds by their main chains, and at least one remainder of a cleavable group, wherein N and P are as defined above.

28. Substrate according to claim 27, **characterized in that** the remainder of the cleavable group is at the end of the main chain of the copolymer or at the end of a side chain of the copolymer.

29. Substrate according to any of claims 26 to 28, **characterized in that** its surface, at least part of which is coated with the epilame, is made of a material chosen from the group including metals, metal oxides, metal nitrides, metal borides, metal carbides, polymers, diamond, sapphire, ruby, quartz, silicon, silicon oxides, silicon nitrides, silicon carbides, DLC (Diamond Like Carbon), and their alloys.

30. Timepiece or piece of jewellery comprising an element including a substrate according to any of claims 26 to 29.
